# EUROPÄISCHE PATENTANMELDUNG

(11) **EP 3 925 441 A1**
(43) Veröffentlichungstag der Anmeldung: **22.12.2021**
(21) Anmeldenummer: 21179253.6
(22) Anmeldetag: 14.06.2021
(51) Int. Cl.: A01K 27/00, B65F 1/06, A01K 5/01

(54) **VORRICHTUNG, DIE AN EINER TIERLEINE ANBRINGBAR IST**

(30) Priorität: 18.06.2020 DE 102020116125
(71) Anmelder: Mingas, Ioannis, 30926 Seelze (DE)
(72) Erfinder: Mingas, Ioannis, 30926 Seelze (DE)
(74) Vertreter: Patentanwälte Thömen & Körner

(57) **Zusammenfassung**

Die Erfindung betrifft eine Vorrichtung (10), die an einer Tierleine (12) anbringbar ist, umfassend einen ersten Teil (14) und einen zweiten Teil (16), wobei die Tierleine (12) zwischen dem ersten (14) und dem zweiten Teil (16) anordbar ist, wobei die Teile (14, 16) derart ausgebildet und miteinander verbindbar sind, dass die zwischen den Teilen (14, 16) angeordnete Tierleine (12) festgeklemmt wird, wodurch die Vorrichtung (10) an der Tierleine (12) festgelegt ist, wobei wenigstens ein Teil (14) einen Hohlraum (18) aufweist, in dem wenigstens ein Leckerli (22) enthalten ist, oder wobei wenigstens ein Teil (16) einen Hohlraum (20) aufweist, in dem wenigstens ein leerer Kotbeutel (44) enthalten ist.

## Beschreibung

Die Erfindung betrifft eine Vorrichtung, die an einer Tierleine anbringbar ist, umfassend einen ersten Teil und einen zweiten Teil, wobei die Tierleine zwischen dem ersten und dem zweiten Teil anordbar ist, wobei die Teile derart ausgebildet und miteinander verbindbar sind, dass die zwischen den Teilen angeordnete Tierleine festgeklemmt wird, wodurch die Vorrichtung an der Tierleine festgelegt ist, wobei wenigstens ein Teil einen Hohlraum aufweist, in dem wenigstens ein Leckerli enthalten ist, oder wobei wenigstens ein Teil einen Hohlraum aufweist, in dem wenigstens ein leerer Kotbeutel enthalten ist.

Aus der US 9,861,077 B2 ist eine Vorrichtung in Form eines an einer Tierleine angeordneten und abnehmbaren Griffs bekannt. Der Griff dient dazu, die Kontrolle eines an der Tierleine befestigten Tieres zu erleichtern. In einigen Ausführungsformen weist der Griff ein Innenfach auf, das derart ausgebildet ist, um Wasser, leere Kotbeutel oder Leckerlis für das Tier aufzunehmen.

Ausgehend von diesem Stand der Technik liegt der Erfindung die Aufgabe zugrunde, eine gattungsgemäße Vorrichtung zu verbessern.

Diese Aufgabe wird bei einer Vorrichtung nach dem Oberbegriff des Anspruchs 1 durch die kennzeichnenden Merkmale der Ansprüche 1, 5, 12 oder 13 gelöst. Weiterbildungen und vorteilhafte Ausgestaltungen der Erfindung ergeben sich aus den jeweiligen Unteransprüchen.

Die an ein einer Tierleine anbringbare Vorrichtung umfasst einen ersten Teil und einen zweiten Teil, wobei die Tierleine zwischen dem ersten und dem zweiten Teil anordbar ist, wobei die Teile derart ausgebildet und miteinander verbindbar sind, dass die zwischen den Teilen angeordnete Tierleine festgeklemmt wird, wodurch die Vorrichtung an der Tierleine festgelegt ist. Wenigstens ein Teil weist einen Hohlraum auf, in dem wenigstens ein Leckerli enthalten ist. Alternativ weist wenigstens ein Teil einen Hohlraum auf, in dem wenigstens ein leerer Kotbeutel enthalten ist.

Erfindungsgemäß ist vorgesehen, dass das wenigstens eine Leckerli durch eine öffenbare Eintrittsöffnung in den Hohlraum einbringbar ist und bei Bedarf, auch wenn die Vorrichtung an der Tierleine angeordnet ist, durch eine freigebbare Austrittsöffnung herausnehmbar ist, um ein Tier bei dessen Ausbildung zu belohnen oder zu motivieren. Der Teil, in dem das wenigstens eine Leckerli enthalten ist, weist hierzu einen Mechanismus auf, bei dem durch Betätigen desselben die Austrittsöffnung für das wenigstens eine Leckerli zur vorzugsweise vereinzelten Ausgabe des Leckerlis freigegeben wird.

Durch die erfindungsgemäße Vorrichtung wird erreicht, dass der Benutzer, der das Tier an der Tierleine führt, sehr schnell auf die an der Tierleine befestigte, vorzugsweise in Griffnähe der Tierleine angeordnete, Vorrichtung zugreifen kann, um dort den Mechanismus zur Freigabe eines Leckerlis zu betätigen. Dazu muss die Vorrichtung vorteilhaft nicht von der Tierleine abgenommen werden. Das Leckerli steht schnellstmöglich zur Verfügung. Für die Ausbildung eines Tieres, insbesondere eines Hundes, ist es nämlich immens wichtig, das Leckerli unmittelbar, bei einem Hund beispielsweise innerhalb von zwei Sekunden, nach einem erfolgreich ausgeführten Befehl zu geben, um das Tier zu belohnen und zu motivieren. Die Vorrichtung macht die Mitnahme eines Vorrats von Leckerlis beispielsweise in einer Jacke, die bei sommerlichen Temperaturen ungern mitgenommen wird, oder einem separaten Behältnis, das zusätzlich getragen werden muss, vorteilhaft überflüssig.

Ein Leckerli, auch Leckerchen genannt, ist ein kleines, dem Tier wohlschmeckendes Stück Futter, welches unter anderem zur Belohnung und Motivation bei der Ausbildung von Tieren dient. Bei einem Leckerli handelt es sich vorzugsweise um eine professionell hergestellte Spezialität in fester stückiger Form. Leckerlis werden dem Tier sinnvollerweise als Belohnung nach einer gelungenen Übung gegeben. Dadurch soll beim Tier eine positive Assoziation der gerade vollbrachten Leistung mit der Belohnung zustande kommen, die es letztlich dazu veranlasst, die Übung auch ohne Belohnungshäppchen gerne zu wiederholen. Da bei den meisten Tieren der zeitliche Rahmen für eine Assoziation sehr eng ist, sollte das Leckerli möglichst sofort nach der Übung gegeben werden, also innerhalb von Sekunden.

Es kann von Vorteil sein, wenn der Mechanismus einen Schieber aufweist, der innerhalb des Teils bewegbar ist und der bei dessen Betätigung die Austrittsöffnung freigibt. Ein Schieber ermöglicht vorteilhaft die Freigabe der Austrittsöffnung mit nur einer Hand.

Dabei kann von Vorteil sein, wenn der Schieber unter einer Federspannung steht, wobei die Betätigung des Schiebers gegen die Rückstellkraft der Feder erfolgt.

Es kann von Vorteil sein, wenn der Mechanismus, insbesondere der Schieber, derart ausgebildet ist und mit einem Einzelteil des Teils zusammenwirkt, dass bei Betätigung des Schiebers und/oder unmittelbar bei Beendigung der Betätigung des Schiebers ein Klickgeräusch entsteht. Das Klickgeräusch dient dazu, einen Reiz auf das Tier beispielsweise zum Zwecke der Konditionierung auszuüben, insbesondere auf die anstehende Belohnung aufmerksam zu machen und das Tier dadurch heranzurufen.

Erfindungsgemäß kann auch vorgesehen sein, dass die an der Tierleine festgelegte Vorrichtung nach Art eines durch die beiden Teile gebildeten Hohlzylinders ausgebildet ist, wobei die Tierleine durch den zwischen den beiden Teilen sich ausbildenden in Längsrichtung verlaufenden Durchgang geführt und in diesem festgeklemmt ist.

Durch die hohlzylindrische Form der Vorrichtung lässt sich die Vorrichtung besonders gut in Längsrichtung an der Tierleine befestigen. Dabei lässt sich die Vorrichtung besonders schlank ausbilden. Der Durchgang ist vorteilhaft im Querschnitt kreisförmig ausgebildet, da Tierleinen überwiegend auch einen kreisförmigen Querschnitt aufweisen. Selbstverständlich kann der Durchgang auch einen anderen an den Querschnitt der jeweiligen Tierleine angepassten Querschnitt aufweisen.

Es kann von Vorteil sein, wenn der Hohlzylinder ein elliptischer, prismatischer, rechteckiger oder vorzugsweise kreisförmiger Hohlzylinder ist. Ein elliptischer oder insbesondere kreisförmiger Querschnitt hat den Vorteil, dass die Vorrichtung angenehm mit einer Hand zu fassen ist, wobei mit einem Finger, vorzugsweise mit dem Daumen, der gleichen Hand, der Mechanismus zur Freigabe der Austrittsöffnung für das Leckerli betätigt werden kann.

Es kann von Vorteil sein, wenn der Durchmesser des Durchgangs durch Einbringen wenigstens einer in ihrer Dicke ausgewählten Zwischenlage derart verringerbar ist, dass dieser an verschiedene Durchmesser von Tierleinen anpassbar ist. Dadurch wird erreicht, dass nicht eine Vielzahl von Vorrichtungen für unterschiedliche Tierleinen vorgehalten werden müssen. Herstellungs- und Lagerkosten werden eingespart. Zudem kann der Benutzer auch zwischen verschiedenen Tierleinen wechseln, ohne sich eine neue Vorrichtung anschaffen zu müssen.

Es kann von Vorteil sein, wenn die Teile überwiegend aus einem Leichtmaterial, vorzugsweise aus Kunststoff, bestehen. Je leichter die Vorrichtung, desto weniger macht sich diese bei Benutzung der Tierleine bemerkbar. Da eine Tierleine bekanntermaßen bei jedem Wetter und in unterschiedlichsten Umgebungen benutzt wird, hat Kunststoff den Vorteil, dass dieser wasserfest ist und üblicherweise stoßfest ausgebildet werden kann.

Es kann von Vorteil sein, wenn an einer Stirnseite des das wenigstens eine Leckerli enthaltenen Teils der Schieber zu betätigen ist und dass an der gegenüberliegenden Stirnseite des das wenigstens eine Leckerli enthaltenen Teils die Austrittsöffnung zur Abgabe eines Leckerlis freigegeben wird. Dies erleichtert eine Ein-Hand-Bedienung.

Es kann von Vorteil sein, wenn die eine und/oder die andere Stirnseite des das wenigstens eine Leckerli enthaltenen Teils einen abnehmen Deckel aufweist, der nach dessen Abnahme die Eintrittsöffnung des Teils freigibt.

Es kann von Vorteil sein, wenn die Teile an jeweils einer Längskante bzw. jeweils im Bereich einer Längskante zumindest über ein Scharnier, vorzugsweise ein Filmscharnier, dauerhaft miteinander verbunden sind, und dass die Teile an jeweils ihrer anderen Längskante bzw. jeweils im Bereich ihrer anderen Längskante zumindest ein Verbindungselement aufweisen, über das die Teile nach dem Einlegen der Tierleine in den Durchgang reversibel miteinander verbindbar sind, wobei die Tierleine beim Verbinden der Teile im Durchgang festgeklemmt wird. Durch die dauerhafte Verbindung wird sichergestellt, dass kein Teil der Vorrichtung verloren gehen kann. Verbindungelemente sind dem Fachmann in unterschiedlichster Art, beispielsweise als Clip oder Ratsche, wie sie in der US 9,861,077 B2 beschrieben ist, bekannt. Vorteilhaft kann auch ein Schraubverschluss sein, der beispielsweise eine Flügelschraube, eine Flügelmutter oder ein ähnliches mit der Hand betätigbares und wieder lösbares Verbindungselement aufweist.

Erfindungsgemäß kann auch vorgesehen sein, dass der eine Teil für die Aufnahme und Abgabe von Leckerlis und dass der andere Teil für die Aufnahme und Entnahme leerer Kotbeutel ausgebildet ist. Dadurch erfüllt die Vorrichtung gleichzeitig zwei Funktionen. Vorteilhaft brauchen Benutzer somit zusätzlich keine leeren Kotbeutel in Jacken, Taschen, in der Hand oder dergleichen mit sich führen. Die erfindungsgemäße Vorrichtung reicht aus.

Erfindungsgemäß kann auch vorgesehen sein, dass der den wenigstens einen Kotbeutel enthaltene Teil eine Aufnahmeöffnung zum Einbringen des wenigstens einen leeren Kotbeutels in den Hohlraum und eine an der Außenseite des vorzugsweise anderen Teils angeordnete Entnahmeöffnung zur Entnahme des leeren Kotbeutels aus dem Hohlraum aufweist.

Es kann von Vorteil sein, wenn die eine und/oder die andere Stirnseite des wenigstens einen Kotbeutel enthaltenen Teils einen abnehmen Deckel aufweist, der nach dessen Abnahme die Aufnahmeöffnung des Teils freigibt.

Es kann von Vorteil sein, wenn die Entnahmeöffnung derart ausgebildet ist, dass beim Herausziehen des Kotbeutels dieser nicht reißt und dass bei Vorhandensein mehrerer Kotbeutel jeweils nur ein Kotbeutel aus der Entnahmeöffnung herausziehbar ist, wobei die Entnahmeöffnung vorzugsweise kreuz-, rauten- oder sternförmig ausgebildet ist. Um ein Reißen der Kotbeutel zu vermeiden, kann es vorteilhaft sein, wenn vorhandene Ecken der Entnahmeöffnung abgerundet sind.

Es kann von Vorteil sein, wenn die Entnahmeöffnung durch eine Abdeckung verschließbar ist, die manuell von außen innerhalb des Teils, vorzugsweise innerhalb der Wandung des Teils, verschiebbar angeordnet ist, um die Entnahmeöffnung freizugeben und umgekehrt, um die Entnahmeöffnung zu verschließen. Eine solche Abdeckung verhindert, dass insbesondere Schmutz oder Regenwasser in den Hohlraum gelangt. Eine solche verschiebbare Abdeckung kann vorteilhaft mit derjenigen Hand betätigt werden, die gleichzeitig die Vorrichtung hält.

Es kann von Vorteil sein, wenn wenigstens ein, vorzugsweise mehrere leere Kotbeutel auf einem Rohr aufgerollt sind, wobei das Rohr mit diesen durch die Aufnahmeöffnung auf einen im Hohlraum angeordneten Halter, vorzugsweise einen Stab, drehbar aufsetzbar ist, wobei der zuerst abrollbare Kotbeutel durch die Entnahmeöffnung herausnehmbar ist, wobei beim Herausnehmen der darauf folgende Kotbeutel zur Entnahmeöffnung geführt und von dem herausgenommenen Kotbeutel getrennt wird und so weiter. Dadurch wird erreicht, dass nicht nach jedem Gebrauch eines Kotbeutels der Hohlraum des entsprechenden Teils neu aufgefüllt werden muss.

Es kann von Vorteil sein, wenn die Vorrichtung eine Höhe von 10 cm bis 20 cm, vorzugsweise von 10 cm bis 15 cm, besonders bevorzugt von 12 cm bis 13 cm aufweist.

Es kann von Vorteil sein, wenn der größte Außendurchmesser im Querschnitt der Vorrichtung 3 cm bis 8 cm, vorzugsweise 4 cm bis 7 cm, ganz bevorzugt 5 cm bis 6 cm beträgt.

Es kann von Vorteil sein, wenn der größte Durchmesser des Durchgangs 0,25 cm im Querschnitt der Vorrichtung bis 2 cm, vorzugsweise 1 cm bis 1,5 cm beträgt.

Nachfolgend wird die Erfindung anhand eines Ausführungsbeispiels erläutert, das in der Zeichnung dargestellt ist. In dieser zeigen
- Fig. 1: schematisch eine erfindungsgemäße Vorrichtung in perspektivischer Ansicht,
- Fig. 2: schematisch eine erfindungsgemäße Vorrichtung mit Blick auf die obere Stirnseite;
- Fig. 3: schematisch eine erfindungsgemäße Vorrichtung mit Blick auf die untere Stirnseite,
- Fig. 4: schematisch a) eine erfindungsgemäße Vorrichtung mit geschlossener Abdeckung und b) eine erfindungsgemäße Vorrichtung mit geöffneter Abdeckung, jeweils in perspektivischer Darstellung,
- Fig. 5: schematisch eine erfindungsgemäße Vorrichtung in perspektivischer Darstellung,
- Fig. 6: schematisch eine erfindungsgemäße Vorrichtung in perspektivischer Darstellung im geöffneten Zustand mit Verbindungselementen,
- Fig. 7: schematisch eine erfindungsgemäße Vorrichtung in perspektivischer Darstellung in einer Benutzungsposition,
- Fig. 8: schematisch eine erfindungsgemäße Vorrichtung in perspektivischer Darstellung in einer weiteren Benutzungsposition,
- Fig. 9: schematisch eine erfindungsgemäße Vorrichtung in perspektivischer Darstellung in einer weiteren Benutzungsposition und
- Fig. 10: schematisch eine erfindungsgemäße Vorrichtung in perspektivischer Darstellung während der Abgabe eines Leckerlis.

Werden in den Figuren gleiche Bezugszeichen verwendet, so bezeichnen diese gleiche Teile, so dass zwecks Vermeidung von Wiederholungen nicht bei jeder Figurenbeschreibung auf ein bereits beschriebenes Element erneut eingegangen werden muss.

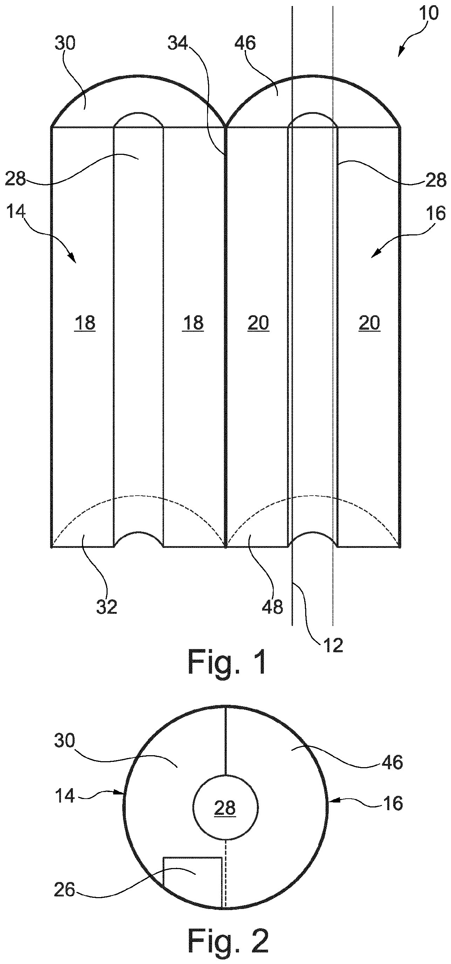

Fig. 1 zeigt schematisch eine erfindungsgemäße Vorrichtung 10 in perspektivischer Ansicht. Dargestellt ist quasi das Gehäuse der Vorrichtung 10.

Die gezeigte Vorrichtung 10, die an einer hier schematisch dargestellten Tierleine 12 anbringbar ist, umfasst einen ersten Teil 14 und einen zweiten Teil 16, wobei die Tierleine 12 zwischen dem ersten 14 und dem zweiten Teil 16 anordbar ist. Die Teile 14, 16 sind derart ausgebildet und miteinander verbindbar, dass die zwischen den Teilen 14, 16 angeordnete Tierleine 12 festgeklemmt wird, wodurch die Vorrichtung 10 an der Tierleine 12 festgelegt ist.

Vorliegend ist die Vorrichtung 10 in einem geöffneten Zustand dargestellt. Die beiden Teile 14, 16 sind jeweils an einer ihrer Längskanten über ein Filmscharnier 34 dauerhaft miteinander verbunden. Über das Filmscharnier 34 sind die Teile 14, 16 auf- und zuklappbar. Im zugeklappten Zustand ist die Vorrichtung 10 nach Art eines durch die beiden Teile 14, 16 gebildeten kreisförmigen Hohlzylinders ausgebildet, wobei die Tierleine 12 durch den zwischen den beiden Teilen 14, 16 sich ausbildenden in Längsrichtung verlaufenden Durchgang 28 geführt und in diesem festgeklemmt ist.

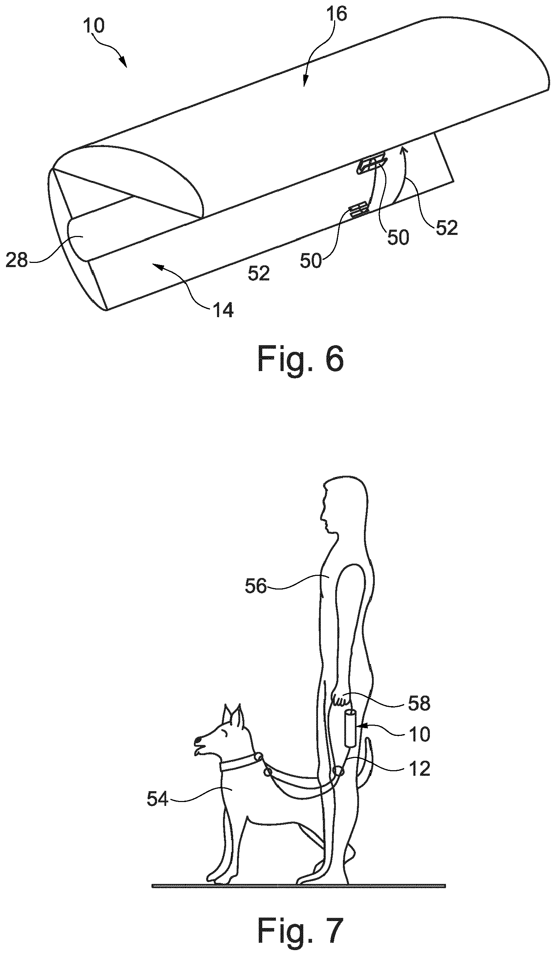

Zum Erreichen des Festklemmens weisen die Teile 14, 16 an jeweils ihrer anderen Längskante ein in Fig. 6 dargestelltes Verbindungselement 50 auf, über das die Teile 14, 16 nach dem Einlegen der Tierleine 12 in den Durchgang 28 reversibel miteinander verbindbar sind. Hierbei können die Verbindungelemente 50 beispielsweise einen Ratschenverschluss oder Clipverschluss ausbilden. In Fig. 6 ist schematisch eine erfindungsgemäße Vorrichtung 10 in perspektivischer Darstellung im leicht geöffneten Zustand mit Verbindungselementen 50 dargestellt, die zusammen einen Clipverschluss bilden. Der Pfeil 52 zeigt die Richtung zum Öffnen der Vorrichtung 10 an, nachdem die Verbindungselemente 50 manuell getrennt und mithin der Clipverschlusses geöffnet worden ist.

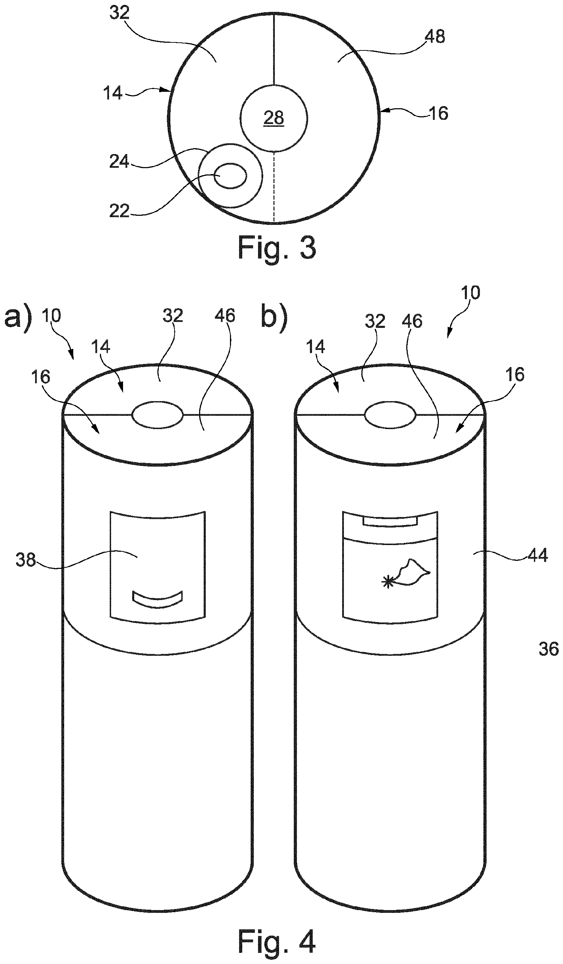

Fig. 2 und 3 zeigen schematisch eine Vorrichtung 10 gemäß Fig. 1, allerdings mit Blick auf deren obere und mit Blick auf deren untere Stirnseite. Zu erkennen sind die beiden Teile 14, 16 mit dem dazwischen angeordneten Durchgang 28. In Fig. 2 sind die oberen Stirnseiten 30, 46 und in Fig. 3 die unteren Stirnseiten 32, 48 der beiden Teile 14, 16 zu sehen.

Vorliegend weist der Teil 14 einen Hohlraum 18 auf, in dem wenigstens ein Leckerli 22 enthalten ist. Die Leckerlis 22 sind durch eine hier nicht dargestellte öffenbare Eintrittsöffnung in den Hohlraum 18 einbringbar. Dazu kann die obere und/oder die untere Stirnseite 30, 32 einen abnehmbaren hier nicht dargestellten Deckel aufweisen, der nach dessen Abnahme die Eintrittsöffnung freigibt. Die untere Stirnseite 32, 48 bezeichnet diejenige Stirnseite, die bei Festlegung der Vorrichtung 10 an der Tierleine 12, zum angeleinten Tier 54 weist. Die obere Stirnseite 30, 46 ist dann die entsprechende vom angeleinten Tier 54 wegweisende Stirnseite.

Erfindungsgemäß ist vorgesehen, dass ein oder mehr als ein Leckerli 22 bei Bedarf, insbesondere wenn das Tier 54 bei dessen Ausbildung belohnt oder motiviert werden soll, durch eine freigebbare Austrittsöffnung 24 herausnehmbar ist. Dazu weist derjenige Teil 14, in dem das wenigstens eine Leckerli 22 enthalten ist, einen Mechanismus auf, bei dem durch Betätigen desselben die Austrittsöffnung 24 für das wenigstens eine Leckerli 22 zur vorzugsweise vereinzelten Ausgabe des Leckerlis 22 freigegeben wird. Bei dem Mechanismus kann es sich um einen dem Fachmann aus dem Bereich der Dosierspender, die zur Abgabe von stückigen Elementen, beispielsweise von Tabletten, Süßstoffstückchen oder dergleichen, bekannten Mechanismus handeln. Vorzugsweise weist der Mechanismus einen Schieber 26 auf, der innerhalb des Teils 14 bewegbar ist und der bei dessen Betätigung die Austrittsöffnung 24 freigibt. In Fig. 2 ist der obere Teil des Schiebers 26 dargestellt, der zur Freigabe der in der Fig. 3 dargestellten Austrittsöffnung 24 zu drücken ist. Der Schieber 26 steht hierbei unter einer Federspannung, wobei die Betätigung des Schiebers 26 gegen die Rückstellkraft der Feder erfolgt. Erfindungsgemäß ist der Schieber 26 derart ausgebildet, dass dieser bei Betätigung und/oder unmittelbar bei Beendigung der Betätigung mit einem Element oder Einzelteil des Teils 14 zusammenwirkt, so dass ein Klickgeräusch entsteht. Dieses entsteht vorzugsweise dann, wenn zwei Flächen aufeinandertreffen.

Fig. 4 zeigt schematisch a) eine erfindungsgemäße Vorrichtung 10 mit geschlossener Abdeckung 38 und b) eine erfindungsgemäße Vorrichtung 10 mit geöffneter Abdeckung 38, jeweils in perspektivischer Darstellung.

Bei der Vorrichtung 10 gemäß Fig. 4 weist nunmehr der Teil 16 einen Hohlraum 20 auf, in dem wenigstens ein leerer Kotbeutel 44 enthalten ist. Der Teil 16 umfasst eine hier nicht dargestellte Aufnahmeöffnung zum Einbringen des wenigstens einen leeren Kotbeutels 44 in den Hohlraum 20 und eine an der Außenseite des Teils 16 angeordnete Entnahmeöffnung 36 zur Entnahme des leeren Kotbeutels 44 aus dem Hohlraum 20.

Zur Aufnahme des wenigstens einen Kotbeutels weist die eine und/oder die andere Stirnseite 46, 48 des Teils 16 einen hier nicht dargestellten abnehmbaren Deckel auf, der nach dessen Abnahme die Aufnahmeöffnung des Teils 16 freigibt.

Die Entnahmeöffnung 36 ist derart ausgebildet, dass beim Herausziehen des Kotbeutels 44 dieser nicht reißt und dass bei Vorhandensein mehrerer Kotbeutel 44 jeweils nur ein Kotbeutel 44 aus der Entnahmeöffnung 36 herausziehbar ist, wobei die Entnahmeöffnung 36 - wie gut in Fig. 4 b) zu erkennen ist - sternförmig ausgebildet ist.

Die Entnahmeöffnung 36 ist durch eine Abdeckung 38 verschließbar. Diese ist von außen innerhalb der Wandung des Teils 16 manuell verschiebbar angeordnet, um die Entnahmeöffnung 36 freizugeben und umgekehrt, um die Entnahmeöffnung 36 zu verschließen. In Fig. 4 a) verschließt die Abdeckung 38 die Entnahmeöffnung 36. In Fig. 4 b) ist die Abdeckung 38 nach oben in Richtung Stirnseite 46 verschoben, so dass die Entnahmeöffnung 36 freigegeben ist.

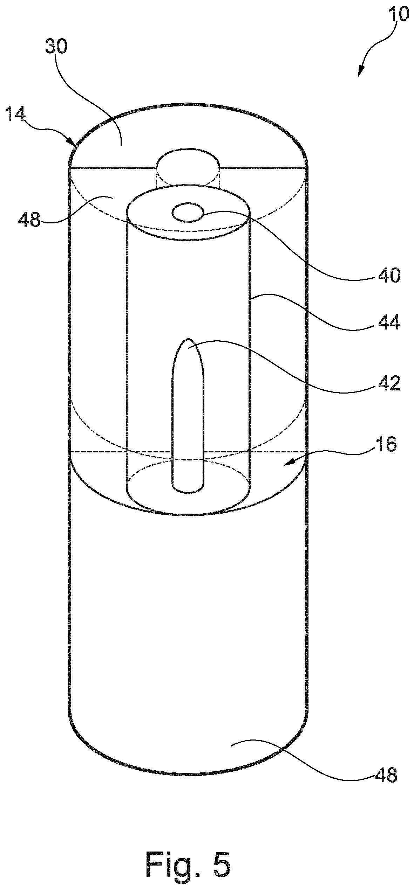

Fig. 5 zeigt die erfindungsgemäße Vorrichtung schematisch in perspektivischer Darstellung. Im Hinblick auf den Teil 16 ist die Vorrichtung 10 transparent dargestellt, um das Innenleben zu zeigen.

Dargestellt ist eine Rolle aus mehreren leeren Kotbeuteln 44, die auf einem Rohr 40 aufgerollt sind. Das Rohr 40 wird samt Kotbeuteln 44 über die hier nicht dargestellte Aufnahmeöffnung in den Hohlraum 20 eingebracht und dort auf einen im Hohlraum 20 angeordneten Haltestab 42 aufgesetzt. Die Rolle ist auf dem Stab 42 drehbar, so dass Kotbeutel 44 von der Rolle abgerollt werden können. Der zuerst abrollbare Kotbeutel 44 wird dann durch die in Fig. 4 b) dargestellte Entnahmeöffnung 36 herausgeführt und entnommen, wobei beim Herausnehmen der darauffolgende Kotbeutel 44 zur Entnahmeöffnung 36 geführt und von dem herausgenommenen Kotbeutel 44 getrennt wird und so weiter. Nach Entnahme des Kotbeutels 44 kann die in Fig. 4 gezeigte Abdeckung 38 aus der in Fig. 4 b) gezeigten Position wieder in die in Fig. 4 a) gezeigte Position verschoben werden, wodurch die Entnahmeöffnung 36 verschlossen wird. Über die hier nicht dargestellte Aufnahmeöffnung, die vorzugsweise in der Stirnseite 46 des Teils 16 angeordnet ist und durch einen hier nicht dargestellten Deckel verschlossen ist, lässt sich das Rohr 40, nachdem alle Kotbeutel 44 von der Rolle abgewickelt sind, auch wieder entnehmen und durch eine neue Rolle ersetzen.

Die Vorrichtung 10 hat eine vorteilhafte Höhe bzw. Länge von 12 cm und einen vorteilhaften Außendurchmesser von 5,5 cm.

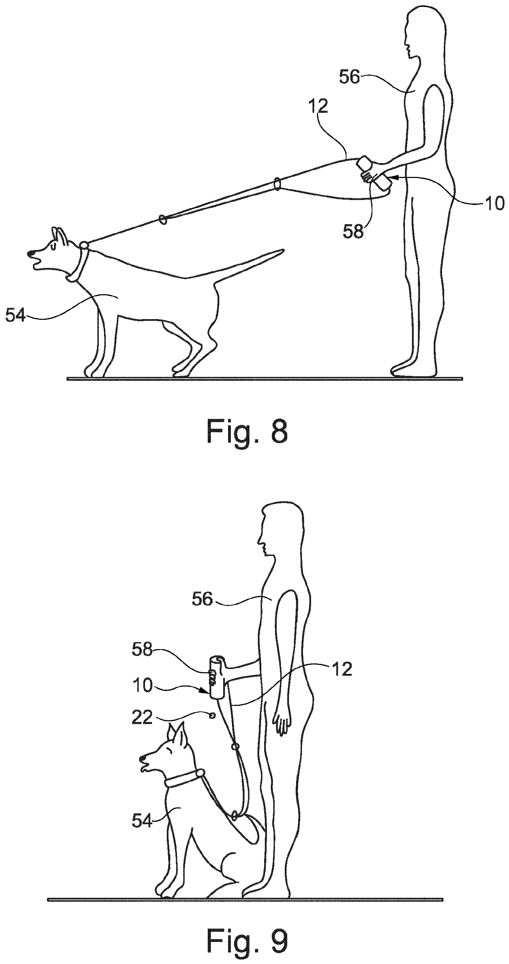

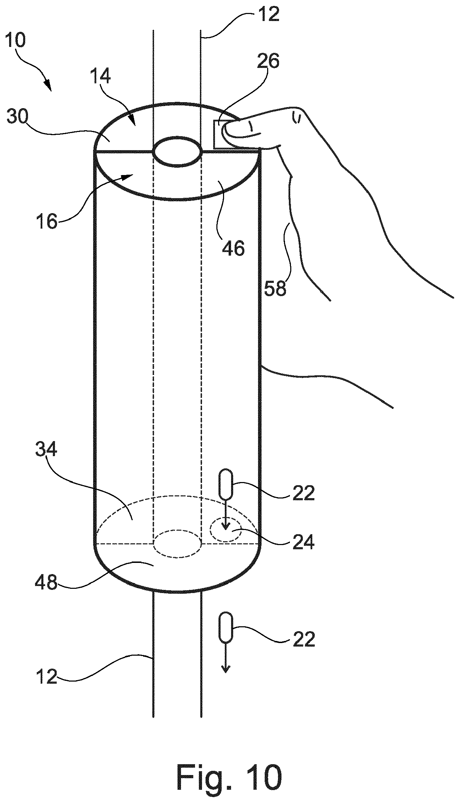

Fig. 7 bis 9 zeigen schematisch jeweils eine an der mit dem Tier 54, vorliegend einem Hund, verbundenen Tierleine 12 festgelegte Vorrichtung 10 in verschiedenen Benutzungspositionen. In Fig. 7 hält der Hundeführer 56 die Tierleine 12 direkt in der linken Hand. Die an der Tierleine 12 festgelegte Vorrichtung 10 hängt der Schwerkraft folgend unterhalb der Griffposition nach unten. Die Tierleine 12 zum Hund 54 ist insgesamt locker. In Fig. 8 ist die Tierleine 12 zum Hund 54 dagegen gespannt. Der Hundeführer 56 hält die an der Tierleine 12 festgelegte Vorrichtung 10 wie einen Griff in der Hand 58. In Fig. 9 hält der Hundeführer 56 die an der Tierleine 12 festgelegte Vorrichtung 10 wieder in einer Hand 58, um zur Belohnung des Hundes 54 ein Leckerli 22 aus der Vorrichtung freizugeben. Detaillierter ist dieser Schritt in Fig. 10 dargestellte. Dabei drückt der Hundeführer 56 mit dem Daumen seiner Hand 58 auf einen an der einen Stirnseite 32 angeordneten Druccknopf eines Schiebers 26, wodurch auf der gegenüberliegenden Stirnseite 34 eine Austrittsöffnung 24 freigegeben wird und das Leckerli 22 aus dem die Leckerlis 22 enthaltenen Teil 14 der Vorrichtung 10 fällt.

### Bezugszeichenliste (ist Teil der Beschreibung)

- 10: Vorrichtung
- 12: Tierleine
- 14: erster Teil
- 16: zweiter Teil
- 18: Hohlraum
- 20: Hohlraum
- 22: Leckerli
- 24: Austrittsöffnung
- 26: Schieber
- 28: Durchgang
- 30: Stirnseite
- 32: Stirnseite
- 34: Filmscharnier
- 36: Entnahmeöffnung
- 38: Abdeckung
- 40: Rohr
- 42: Stab
- 44: Kotbeutel
- 46: Stirnseite
- 48: Stirnseite
- 50: Verbindungselement
- 52: Richtungspfeil
- 54: Tier, insbesondere Hund
- 56: Hundeführer
- 58: Hand

## Patentansprüche

1. Vorrichtung (10), die an einer Tierleine (12) anbringbar ist, umfassend einen ersten Teil (14) und einen zweiten Teil (16), wobei die Tierleine (12) zwischen dem ersten (14) und dem zweiten Teil (16) anordbar ist, wobei die Teile (14, 16) derart ausgebildet und miteinander verbindbar sind, dass die zwischen den Teilen (14, 16) angeordnete Tierleine (12) festgeklemmt wird, wodurch die Vorrichtung (10) an der Tierleine (12) festgelegt ist, wobei wenigstens ein Teil (14) einen Hohlraum (18) aufweist, in dem wenigstens ein Leckerli (22) enthalten ist, oder wobei wenigstens ein Teil (16) einen Hohlraum (20) aufweist, in dem wenigstens ein leerer Kotbeutel (44) enthalten ist, **dadurch gekennzeichnet, dass** das wenigstens eine Leckerli (22) durch eine öffenbare Eintrittsöffnung in den Hohlraum (18) einbringbar ist und bei Bedarf, auch wenn die Vorrichtung (10) an der Tierleine (12) angeordnet ist, durch eine freigebbare Austrittsöffnung (24) herausnehmbar ist, um ein Tier bei dessen Ausbildung zu belohnen oder zu motivieren, wobei der Teil (14), in dem das wenigstens eine Leckerli (22) enthalten ist, einen Mechanismus aufweist, bei dem durch Betätigen desselben die Austrittsöffnung (24) für das wenigstens eine Leckerli (22) zur vorzugsweise vereinzelten Ausgabe des Leckerlis (22) freigegeben wird.

2. Vorrichtung (10) nach Anspruch 1, **dadurch gekennzeichnet, dass** der Mechanismus einen Schieber (26) aufweist, der innerhalb des Teils (14) bewegbar ist und der bei dessen Betätigung die Austrittsöffnung (24) freigibt.

3. Vorrichtung (10) nach Anspruch 2, **dadurch gekennzeichnet, dass** der Schieber (26) unter einer Federspannung steht, wobei die Betätigung des Schiebers (26) gegen die Rückstellkraft der Feder erfolgt.

4. Vorrichtung (10) nach Anspruch 2 oder 3, **dadurch gekennzeichnet, dass** der Mechanismus, insbesondere der Schieber (26), derart ausgebildet und mit einem Element des Teils (14) zusammenwirkt, dass bei Betätigung des Schiebers (26) und/oder unmittelbar bei Beendigung der Betätigung des Schiebers (26) ein Klickgeräusch entsteht.

5. Vorrichtung (10) nach dem Oberbegriff des Anspruchs 1 oder nach einem der vorherigen Ansprüche, **dadurch gekennzeichnet, dass** die an der Tierleine (12) festgelegte Vorrichtung (10) nach Art eines durch die beiden Teile (14, 16) gebildeten Hohlzylinders ausgebildet ist, wobei die Tierleine (12) durch den zwischen den beiden Teilen (14, 16) sich ausbildenden in Längsrichtung verlaufenden Durchgang (28) geführt und in diesem festgeklemmt ist.

6. Vorrichtung (10) nach Anspruch 5, **dadurch gekennzeichnet, dass** der Hohlzylinder ein elliptischer, prismatischer, rechteckiger oder vorzugsweise kreisförmiger Hohlzylinder ist.

7. Vorrichtung (10) nach einem der vorherigen Ansprüche, **dadurch gekennzeichnet, dass** der Durchmesser des Durchgangs (28) durch Einbringen wenigstens einer in ihrer Dicke ausgewählten Zwischenlage derart verringerbar ist, dass dieser an verschiedene Durchmesser von Tierleinen (12) anpassbar ist.

8. Vorrichtung (19) nach einem der vorherigen Ansprüche, **dadurch gekennzeichnet, dass** die Teile (14, 16) überwiegend aus einem Leichtmaterial, vorzugsweise aus Kunststoff, bestehen.

9. Vorrichtung (10) nach einem der vorherigen Ansprüche, **dadurch gekennzeichnet, dass** an einer Stirnseite (30) des das wenigstens eine Leckerli (22) enthaltenen Teils (14) der Schieber (26) zu betätigen ist und dass an der gegenüberliegenden Stirnseite (32) des das wenigstens eine Leckerli (22) enthaltenen Teils (14) die Austrittsöffnung (24) zur Abgabe eines Leckerlis (22) freigegeben wird.

10. Vorrichtung (10) nach einem der vorherigen Ansprüche, **dadurch gekennzeichnet, dass** die eine und/oder die andere Stirnseite (30, 32) des das wenigstens eine Leckerli (22) enthaltenen Teils (14) einen abnehmen Deckel aufweist, der nach dessen Abnahme die Eintrittsöffnung des Teils (14) freigibt.

11. Vorrichtung (10) nach einem der vorherigen Ansprüche, **dadurch gekennzeichnet, dass** die Teile (14, 16) an jeweils einer Längskante bzw. jeweils im Bereich einer Längskante zumindest über ein Scharnier, vorzugsweise ein Filmscharnier (34), dauerhaft miteinander verbunden sind, und dass die Teile (14, 16) an jeweils ihrer anderen Längskante bzw. jeweils im Bereich ihrer anderen Längskante zumindest ein Verbindungselement aufweisen, über das die Teile (14, 16) nach dem Einlegen der Tierleine (12) in den Durchgang (28) reversibel miteinander verbindbar sind, wobei die Tierleine (12) beim Verbinden der Teile (14, 16) im Durchgang (28) festgeklemmt wird.

12. Vorrichtung (10) nach dem Oberbegriff des Anspruchs 1 oder nach einem der vorherigen Ansprüche, **dadurch gekennzeichnet, dass** der eine Teil (14) für die Aufnahme und Abgabe von Leckerlis (22) und dass der andere Teil (16) für die Aufnahme und Entnahme leerer Kotbeutel (44) ausgebildet ist.

13. Vorrichtung (10) nach dem Oberbegriff des Anspruchs 1 oder nach einem der vorherigen Ansprüche, **dadurch gekennzeichnet, dass** der den wenigstens einen Kotbeutel (44) enthaltene Teil (16) eine Aufnahmeöffnung zum Einbringen des wenigstens einen leeren Kotbeutels (44) in den Hohlraum (20) und eine an der Außenseite des Teils (16) angeordnete Entnahmeöffnung (36) zur Entnahme des leeren Kotbeutels (44) aus dem Hohlraum (20) aufweist.

14. Vorrichtung (10) nach einem der vorherigen Ansprüche, **dadurch gekennzeichnet, dass** die eine und/oder die andere Stirnseite (46, 48) des den wenigstens einen Kotbeutel (44) enthaltenen Teils (16) einen abnehmen Deckel aufweist, der nach dessen Abnahme die Aufnahmeöffnung des Teils (16) freigibt.

15. Vorrichtung (10) nach einem der vorherigen Ansprüche, **dadurch gekennzeichnet, dass** die Entnahmeöffnung (36) derart ausgebildet ist, dass beim Herausziehen des Kotbeutels (44) dieser nicht reißt und dass bei Vorhandensein mehrerer Kotbeutel (44) jeweils nur ein Kotbeutel (44) aus der Entnahmeöffnung (36) herausziehbar ist, wobei die Entnahmeöffnung (36) vorzugsweise kreuz-, rauten- oder sternförmig ausgebildet ist.

16. Vorrichtung (10) nach einem der vorherigen Ansprüche, **dadurch gekennzeichnet, dass** die Entnahmeöffnung (36) durch eine Abdeckung (38) verschließbar ist, die manuell von außen innerhalb des den wenigstens einen Kotbeutel (44) enthaltenen Teils (16), vorzugsweise innerhalb der Wandung des Teils (16), verschiebbar angeordnet ist, um die Entnahmeöffnung (36) freizugeben und umgekehrt um die Entnahmeöffnung (36) zu verschließen.

17. Vorrichtung (10) nach einem der vorherigen Ansprüche, **dadurch gekennzeichnet, dass** wenigstens ein, vorzugsweise mehrere leere Kotbeutel (44) auf einem Rohr (40) aufgerollt sind, wobei das Rohr (40) mit diesen durch die Aufnahmeöffnung auf einen im Hohlraum (20) angeordneten Halter, vorzugsweise auf einen Haltestab (42), aufsetzbar und dort drehbar ist, wobei der zuerst abrollbare Kotbeutel (44) durch die Entnahmeöffnung (36) herausnehmbar ist, wobei beim Herausnehmen der darauf folgende Kotbeutel (44) zur Entnahmeöffnung (36) geführt und von dem herausgenommenen Kotbeutel (44) getrennt wird und so weiter.

18. Vorrichtung (10) nach einem der vorherigen Ansprüche, **dadurch gekennzeichnet, dass** die Vorrichtung (10) eine Höhe von 10 cm bis 20 cm, vorzugsweise von 10 cm bis 15 cm, besonders bevorzugt von 12 cm bis 13 cm aufweist.
